# EUROPEAN PATENT APPLICATION

(11) **EP 4 628 196 A1**
(43) Date of publication of application: **08.10.2025**
(21) Application number: 23898304.3
(22) Date of filing: 29.11.2023
(51) Int. Cl.: B01D 53/22, B01D 53/26

(54) **METHOD FOR SEPARATING MIXED GAS**

(30) Priority: 30.11.2022 KR 20220165174
(71) Applicant: Lotte Chemical Corporation, Seoul 05551 (KR)
(72) Inventor: LEE, Sang Jung, Seoul 07594 (KR); HAN, Jung Eun, Seoul 07594 (KR); NAM, Sang A, Seoul 07594 (KR)
(74) Representative: Germain Maureau
(86) International application number: PCT/KR2023/019462
(87) International publication number: WO 2024/117778

(57) **Abstract**

The present disclosure relates to a method for separating a mixed gas. Specifically, the present disclosure can separate a large amount of target product from a mixed gas.

## Description

### [Technical Field]

The present disclosure relates to a method for separating a mixed gas. Specifically, the present disclosure relates to a method capable of obtaining a target product in high yield and increasing the energy efficiency of a separation process.

### [Background Art]

Combustion gas is gas produced when fuel is burned. The composition of the combustion gas varies depending on a type and degree of fuel. The combustion gas usually contains carbon dioxide, oxygen, and the like. The carbon dioxide causes global warming. Accordingly, it is preferable to separate (or remove) carbon dioxide from the combustion gas before emitting the combustion gas.

A technique for separating carbon dioxide includes an adsorption method, an absorption method, a membrane separation method, and the like. Among these, the membrane separation method may reduce the energy required for a phase change because the phase change is not used. The membrane separation method is a method of separating a permeable component and an impermeable component among components consisting of the mixture through a separation membrane. In particular, carbon dioxide and the like are absorbed or dissolved in the separation membrane and then move within the separation membrane to permeate through the separation membrane. A gas separation membrane is used herein.

The energy required to operate the gas separation membrane is high, and the operating cost of the gas separation membrane is expensive. The reason is that the gas separation membrane uses electricity as a main energy source. In the prior art, it is noted that when carbon dioxide is separated through the gas separation membrane, energy required for equipment operation is reduced by changing process conditions. However, the prior art does not focus on increasing the yield of carbon dioxide separation. In the process of operating the gas separation membrane, it is necessary to reduce the energy required for its operation while increasing the yield of carbon dioxide separation.

### [Disclosure]

### [Technical Problem]

An object of the present disclosure is to increase the yield of a target component in a process of separating the target component from a mixed gas by a gas separation membrane, and reduce the energy required for its operation by reducing the area of the gas separation membrane compared to the related art.

### [Technical Solution]

An aspect of the present disclosure provides a method for separating a mixed gas, the method including: a first step of preparing a compressed mixed gas; a second step of supplying the compressed mixed gas to a first gas separation membrane unit by a supply part of the first gas separation membrane unit, discharging gas that permeates through the separation part of the first gas separation membrane unit through a permeable part of the first gas separation membrane unit, and discharging gas that does not permeate through the separation part of the first gas separation membrane unit through an impermeable part of the first gas separation membrane unit; a third step of supplying the gas that permeates through the permeable part of the first gas separation membrane unit to a second gas separation membrane unit by a supply part of the second gas separation membrane unit, discharging gas that permeates through the separation part of the second gas separation membrane unit through a permeable part of the second gas separation membrane unit, and discharging gas that does not permeate through the separation part of the second gas separation membrane unit through an impermeable part of the second gas separation membrane unit; and a fourth step of supplying the gas that is discharged through the permeable part of the second gas separation membrane unit to the third gas separation membrane unit by a supply part of the third gas separation membrane unit, discharging gas that permeates through a separation part of the third gas separation membrane unit through a permeable part of the third gas separation membrane unit, and discharging gas that does not permeates through the separation part of the third gas separation membrane unit through an impermeable part of the third separation membrane unit. In the second step, a ratio (V1P/V1F) of a volumetric flow rate (V1F) of the gas supplied to the first gas separation membrane unit by the supply part of the first gas separation membrane unit and a volumetric flow rate (V1P) of the gas discharged through the permeable part of the first gas separation membrane unit is controlled to less than 0.2.

### [Advantageous Effects]

According to the present disclosure, it is possible to increase the yield of a target component in a process of separating the target component from a mixed gas through a gas separation membrane, and reduce the energy required for its operation by reducing the area of the gas separation membrane compared to the related art.

### [Description of Drawings]

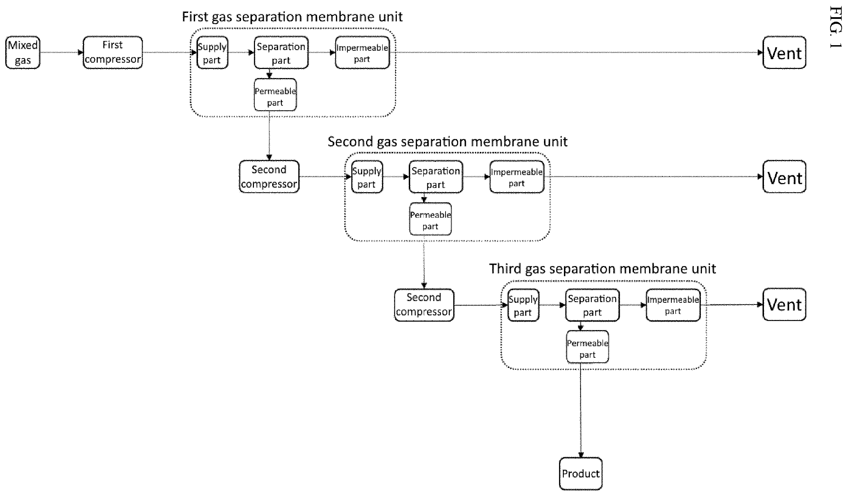

FIGS. 1 to 7 illustrate process flow diagrams (PFDs) according to the present disclosure.

### [Best Mode]

Hereinafter, the present disclosure will be described in detail.

The present disclosure relates to a method for separating a mixed gas. FIG. 1 schematically illustrates a process of the present disclosure.

The mixed gas contains a plurality of different gas components. In other words, the mixed gas is a gas mixture containing a plurality of gas components. The present disclosure is a method for separating a target gas component from a mixture consisting of a plurality of gas components or including the plurality of gas components.

The present disclosure includes at least steps of preparing a compressed mixed gas and separating the compressed mixed gas.

In the present disclosure, the step of separating the mixed gas is performed by at least three gas separation membrane units (first to third gas separation membrane units) connected to each other in series.

Therefore, the present disclosure includes a step of preparing a compressed mixed gas (first step) and at least three steps of separating the mixed gas (second to fourth steps). The steps of separating the mixed gas may be performed continuously.

The gas separation membrane unit includes at least a supply part, a separation part, a permeable part and an impermeable part. The gas separation membrane unit may include a single gas separation membrane, or a plurality of gas separation membranes connected to each other in series and/or in parallel. The upper portion included in the gas separation membrane unit refers to a functional division of the gas separation membrane unit. In the gas separation membrane unit, the supply part, the separation part, the permeable part, and the impermeable part refer to parts that perform specific "functions" in the gas separation membrane unit, and do not refer to specific "locations" of the gas separation membrane.

The supply part supplies a gas raw material to be separated to the separation membrane unit.

The separation part permeates specific components and does not permeate other components according to weight, solubility, permeability, etc.

The permeable part discharges materials that permeate through the separation part from the gas separation membrane unit.

The impermeable part discharges materials that do not permeate through the separation part from the gas separation membrane unit.

The plurality of gas separation membrane units may be connected to each other in the series.

The first gas separation membrane unit and the second gas separation membrane unit may be connected to supply gas discharged through the permeable part of the first gas separation membrane unit to the second gas separation membrane unit by a supply part of the second gas separation membrane unit.

The second gas separation membrane unit and the third gas separation membrane unit may be connected to supply gas discharged through the permeable part of the second gas separation membrane unit to the third gas separation membrane unit by a supply part of the third gas separation membrane unit.

Accordingly, the present disclosure provides a method for separating a mixed gas, including: a first step of preparing a compressed mixed gas; a second step of supplying the compressed mixed gas to a first gas separation membrane unit by a supply part of the first gas separation membrane unit, discharging gas that permeates through the separation part of the first gas separation membrane unit through a permeable part of the first gas separation membrane unit, and discharging gas that does not permeate through the separation part of the first gas separation membrane unit through an impermeable part of the first gas separation membrane unit; a third step of supplying the gas that permeates through the permeable part of the first gas separation membrane unit to a second gas separation membrane unit by a supply part of the second gas separation membrane unit, discharging gas that permeates through the separation part of the second gas separation membrane unit through a permeable part of the second gas separation membrane unit, and discharging gas that does not permeate through the separation part of the second gas separation membrane unit through an impermeable part of the second gas separation membrane unit; and a fourth step of supplying the gas that is discharged through the permeable part of the second gas separation membrane unit to the third gas separation membrane unit by a supply part of the third gas separation membrane unit, discharging gas that permeates through a separation part of the third gas separation membrane unit through a permeable part of the third gas separation membrane unit, and discharging gas that does not permeates through the separation part of the third gas separation membrane unit through an impermeable part of the third separation membrane unit.

The first step is a step of obtaining the compressed mixed gas. In this step, a precompressed mixed gas may be prepared. As exemplarily illustrated in FIG. 1, the mixed gas may be compressed by a compressor (a first compressor, the type thereof will be described below) before being supplied to the first gas separation membrane unit.

The second step is a step of separating the mixed gas by the first gas separation membrane unit. In the second step, the mixed gas is supplied to the first gas separation membrane unit by the supply part of the first gas separation membrane unit. In the second step, the supplied gas is separated by the separation part of the first separation membrane unit. In the second step, the gas that permeates through the separation part of the first separation membrane unit is discharged through the permeable part of the first separation membrane unit. In the second step, the gas that does not permeate through the separation part of the first separation membrane unit is discharged through the impermeable part of the first separation membrane unit. In the second step, the gas that is discharged through the impermeable part of the first separation membrane unit is emitted through a vent.

The third step is a step of separating the mixed gas by the second gas separation membrane unit. In the third step, the gas discharged through the permeable part of the first separation membrane unit is supplied to the second separation membrane unit by the supply part of the second separation membrane unit. In the third step, the supplied gas is separated by the separation part of the second separation membrane unit. In the third step, the gas that permeates through the separation part of the second separation membrane unit is discharged through the permeable part of the second separation membrane unit. In the third step, the gas that does not permeate through the separation part of the second gas separation membrane unit is discharged through the impermeable part of the second separation membrane unit. In the third step, the gas discharged through the impermeable part of the second separation membrane unit is emitted through a vent.

The fourth step is a step of separating the mixed gas by the third gas separation membrane unit. In the fourth step, the gas discharged through the permeable part of the second separation membrane unit is supplied to the third separation membrane unit by the supply part of the third gas separation membrane unit. In the fourth step, the supplied gas is separated by the separation part of the third separation membrane unit. In the fourth step, the gas that permeates through the separation part of the third gas separation membrane unit is discharged through the permeable part of the third gas separation membrane unit. In the fourth step, the gas that does not permeate through the separation part of the third gas separation membrane unit is discharged through the impermeable part of the third gas separation membrane unit. In the fourth step, the gas discharged through the impermeable part of the third separation membrane unit is emitted through a vent.

The present disclosure controls a stage cut of the first gas separation membrane unit to be less than a specific value. The stage cut refers to a volumetric flow rate of a material discharged by the unit compared to a volumetric flow rate of a material supplied to the corresponding unit.

The present disclosure is characterized in that in the second step, a ratio (V1P/V1F) of a volumetric flow rate (V1F) of the gas supplied to the first gas separation membrane unit by the supply part of the first gas separation membrane unit and a volumetric flow rate (V1P) of the gas discharged through the permeable part of the first gas separation membrane unit is controlled to less than 0.2. As such, when controlling the operating conditions of the first gas separation membrane unit, a gas mixture separation process with a high yield of the target product may be performed even under the same equipment conditions. In other words, the operating energy of the gas separation membrane to obtain the same amount of target product may be drastically reduced under the above conditions. The ratio (V1P/V1F) may be, for example, 0.10 or more, 0.11 or more, or 0.12 or more. The ratio (V1P/V1F) may be, for example, 0.19 or less, 0.18 or less, 0.17 or less, 0.16 or less, 0.15 or less, 0.14 or less, or 0.13 or less.

The stage cut of each gas separation membrane unit may be determined by controlling the pressure of the gas supplied to each separation membrane unit or discharged through each separation membrane unit. For example, if a vacuum pump or the like is installed in a pipe through which the gas discharged through the permeable part of the gas separation membrane unit moves and the pressure thereof is controlled, the flow rate may be controlled as described above.

The present disclosure may improve the yield of the target product by controlling a volumetric flow rate ratio between the raw material and the product in the first gas separation membrane unit at least as described above.

The present disclosure does not particularly limit the conditions of the remaining processes. However, the process conditions of the present disclosure may be described below in more detail.

The present disclosure may also appropriately control the stage cut of the second gas separation membrane unit. For example, in the present disclosure, in the third step, a ratio (V2P/V2F) of a volumetric flow rate (V2F) of the gas supplied to the second gas separation membrane unit by the supply part of the second gas separation membrane unit and a volumetric flow rate (V2P) of the gas discharged through the permeable part of the second gas separation membrane unit may be controlled in the range of 0.5 to 0.8. Here, the volumetric flow rate (V2F) of the gas supplied to the supply part of the second gas separation membrane unit may be equal to the volumetric flow rate (V1P) of the gas discharged through the permeable part of the first gas separation membrane unit. In another example, the volumetric flow rate (V2F) of the gas supplied to the supply part of the second gas separation membrane unit may be equal to the sum of the volumetric flow rate of the gas discharged through the permeable part of the first gas separation membrane unit and a flow rate of a portion of the flow discharged through the impermeable part of the third gas separation membrane unit to be described below.

The ratio (V2P/V2F) may be, for example, 0.55 or more, or 0.60 or more. The ratio (V2P/V2F) may be, for example, 0.75 or less, or 0.70 or less.

The flow rate ratio controlled in the second step of the present disclosure may have a more significant effect when the pressure of the compressed mixed gas prepared in the first step is controlled within a specific range. Similarly to the present disclosure, in a prior art for disposing the gas separation membrane unit, about 5 bara of a compressed mixed gas is supplied to the gas separation membrane unit.

The present disclosure may also appropriately control the stage cut of the third gas separation membrane unit. For example, in the present disclosure, in the fourth step, a ratio (V3P/V3F) of a volumetric flow rate (V3F) of the gas supplied to the third gas separation membrane unit by the supply part of the third gas separation membrane unit and a volumetric flow rate (V3P) of the gas discharged through the permeable part of the third gas separation membrane unit may be controlled in the range of 0.5 to 0.8. Here, the volumetric flow rate (V3F) of the gas supplied to the supply part of the third gas separation membrane unit may be equal to the volumetric flow rate (V2P) of the gas discharged through the permeable part of the second gas separation membrane unit.

The ratio (V3P/V3F) may be, for example, 0.55 or more, or 0.60 or more. The ratio (V3P/V3F) may be, for example, 0.75 or less, or 0.70 or less.

In the present disclosure, a compressed mixed gas is prepared at a lower pressure than the prior art. That is, in the present disclosure, it is possible to obtain a product flow having a high concentration of the target product by controlling the stage cut of the gas separation membrane unit that injects the compressed mixed gas having a lower pressure than the prior art to less than a specific value. Specifically, in the present disclosure, in the first step, a compressed mixed gas having a pressure in the range of 2.0 bara to 4 bara may be prepared. In another example, the pressure of the compressed mixed gas prepared in the first step may be 2.1 bara or more. In yet another example, the pressure of the compressed mixed gas prepared in the first step may be 3.5 bara or less, 3.0 bara or less, or 2.5 bara or less.

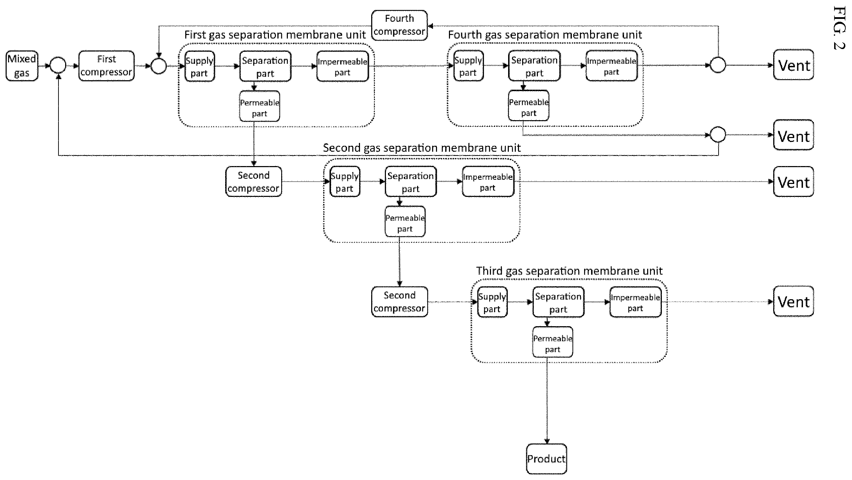

In addition to the configuration, in the present disclosure, it is possible to separate a target component from a mixed gas at a high concentration by introducing various types of bypasses. This is illustrated in FIGS. 2 to 7.

In the present disclosure, the mixed gas separation process may be performed by introducing an additional gas separation membrane unit (fourth gas separation membrane unit) in addition to the three gas separation membrane units. This is illustrated in FIG. 2. Specifically, the present disclosure may be performed using a process system further including a fourth gas separation membrane unit, wherein the fourth gas separation membrane unit is designed to supply the gas discharged through the impermeable part of the first gas separation membrane unit to the fourth gas separation membrane unit by a supply part of the fourth gas separation membrane unit. This additional step is referred to as a fifth step.

The fifth step is a step of separating the mixed gas by the fourth gas separation membrane unit. In the fifth step, the gas discharged through the impermeable part of the first separation membrane unit is supplied to the fourth separation membrane unit by the supply part of the fourth separation membrane unit. In the fifth step, the supplied gas is separated by the separation part of the fourth separation membrane unit. In the fifth step, the gas that permeates through the separation part of the fourth separation membrane unit is discharged through the permeable part of the fourth separation membrane unit. In the fifth step, the gas that does not permeate through the separation part of the fourth separation membrane unit is discharged through the impermeable part of the fourth separation membrane unit. In the fifth step, the gas discharged through the impermeable part of the first separation membrane unit is emitted through a vent.

That is, in the fifth step of the present disclosure, the gas discharged through the impermeable part of the first gas separation membrane unit may be supplied to the fourth gas separation membrane unit by the supply part of the fourth gas separation membrane unit, the gas that permeates through the separation part of the fourth gas separation membrane unit may be discharged through the permeable part of the fourth gas separation membrane unit, and the gas that does not permeate through the separation part of the fourth gas separation membrane unit may be discharged through the impermeable part of the fourth gas separation membrane unit.

In the fifth step of the present disclosure, the gas discharged through the permeable part of the fourth gas separation membrane unit may be branched. A portion of the branched gas may be emitted through a vent. The remaining portion of the branched discharged gas may be supplied to the first gas separation membrane unit. The remaining portion may be compressed together with the raw material mixed gas in the first step and then supplied to the first gas separation membrane unit. In the fifth step of the present disclosure, the gas discharged through the permeable part of the fourth gas separation membrane unit is branched, and a portion thereof may be emitted and the remaining portion may be prepared as the compressed mixed gas in the first step.

In the fifth step of the present disclosure, the gas discharged through the impermeable part of the fourth gas separation membrane unit may be branched. A portion of the branched gas may be emitted through a vent. The remaining portion may be supplied to the first gas separation membrane unit. The remaining portion may be supplied to the first gas separation membrane unit together with (or mixed with) the compressed mixed gas through the first step. In the fifth step of the present disclosure, the gas discharged through the impermeable part of the fourth gas separation membrane unit is branched, and a portion thereof may be emitted and the remaining portion may be supplied to the first gas separation membrane unit together with the compressed mixed gas by the supply part of the first gas separation membrane unit in the second step.

In the present disclosure, before mixing with the compressed mixed gas in the second step, in the gas discharged through the impermeable part of the fourth gas separation membrane unit in the fifth step, a portion of the gas supplied to the first gas separation membrane unit by the supply part of the first gas separation membrane unit may be further compressed. In the gas discharged through the impermeable part of the fourth gas separation membrane unit, a portion of gas that is branched and supplied to the first gas separation membrane unit may be compressed, and the compressed gas may be supplied to the first gas separation membrane together with the mixed gas compressed in the first step. In the present disclosure, a fourth compressor may be used therein. The fourth compressor that may be used in the present disclosure may be, for example, a cleaning compressor. That is, in the present disclosure, the gas discharged through the impermeable part of the fourth gas separation membrane unit may be re-supplied to the first gas separation membrane unit in a state where the concentration of the target product is increased.

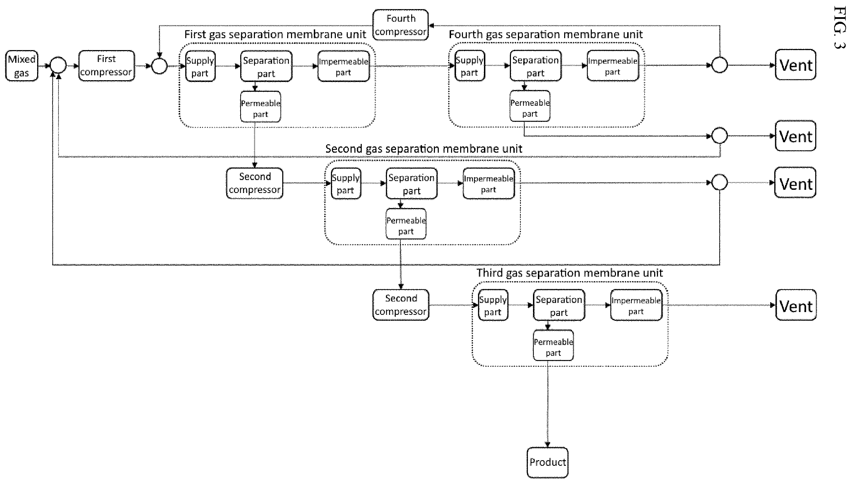

In the present disclosure, the gas flow discharged through the impermeable part of the second gas separation membrane unit is also branched to increase the yield (or concentration) of the target product. The branching method is illustrated in FIG. 3.

In the present disclosure, a portion of the gas discharged through the impermeable part of the second gas separation membrane unit may be emitted through a vent, and the remaining portion may be mixed with the mixed gas raw material. In the first step of the present disclosure, the mixed gas may be prepared as the compressed mixed gas.

That is, in the third step of the present disclosure, the gas discharged through the impermeable part of the second gas separation membrane unit may be branched, and a portion thereof may be emitted and the remaining portion may be prepared as the compressed mixed gas in the first step.

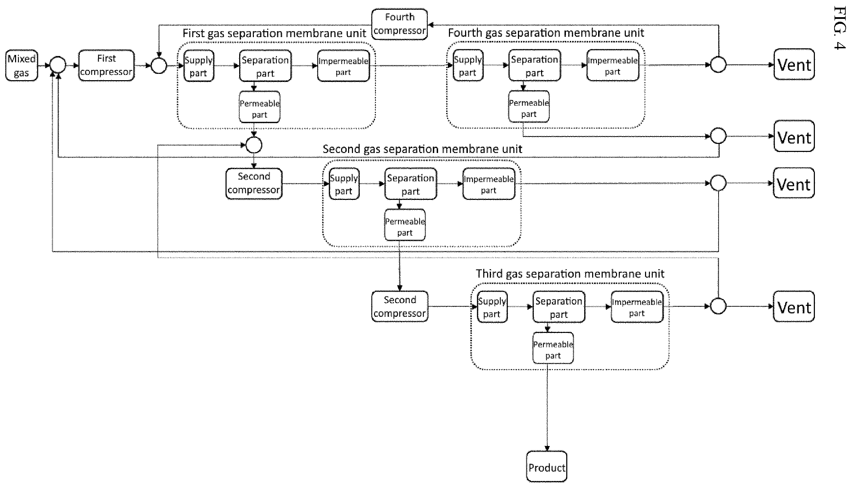

In the present disclosure, the gas flow discharged through the impermeable part of the third gas separation membrane unit is also branched to increase the yield (or concentration) of the target product. The branching method is illustrated in FIG. 4.

In the present disclosure, a portion of the gas discharged through the impermeable part of the third gas separation membrane unit may be emitted through a vent, and the remaining portion may be mixed with the gas discharged through the permeable part of the first gas separation membrane unit. In the present disclosure, the mixed gas above may be supplied to the second separation membrane unit.

Therefore, in the fourth step of the present disclosure, the gas discharged through the impermeable part of the third gas separation membrane unit is branched, and a portion thereof may be emitted and the remaining portion may be supplied to the second gas separation membrane unit by the supply part of the second gas separation membrane unit together with the gas discharged through the permeable part of the first gas separation membrane unit.

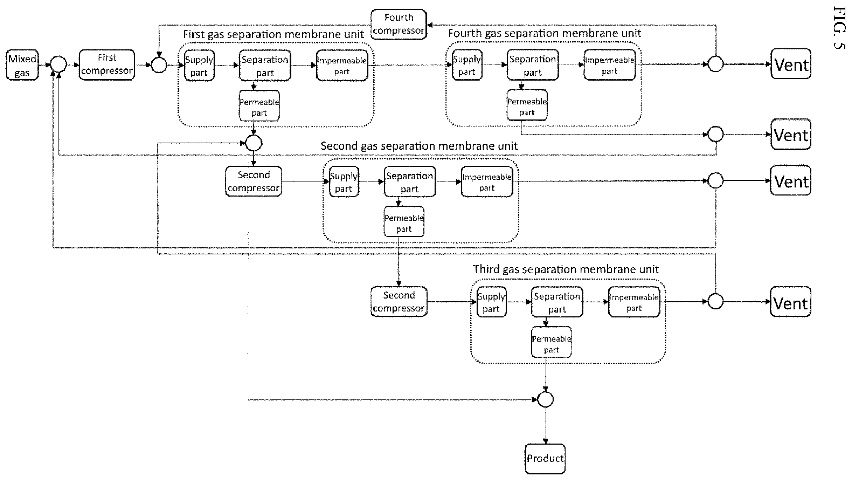

In the present disclosure, the gas flow discharged through the permeable part of the first gas separation membrane unit is also branched to increase the yield (or concentration) of the target product. The branching method is illustrated in FIG. 5.

In the present disclosure, the gas flow discharged through the permeable part of the first gas separation membrane unit may be branched. A portion of the branched flow may be further separated by the remaining gas separation membrane units. The remaining portion of the branched flow may be mixed with the gas flow discharged through the permeable part of the third gas separation membrane unit and then emitted. The emitted flow may be a product flow.

Therefore, in the second step of the present disclosure, the gas discharged through the permeable part of the first gas separation membrane unit is branched, and a portion of the gas may be supplied to the second gas separation membrane unit, and the remaining portion may be mixed with the gas discharged through the permeable part of the third gas separation membrane unit. At this time, the stage cut of the third separation membrane unit described above may be calculated unlike the prior art. Specifically, when the gas discharged through the permeable part of the first gas separation membrane unit is branched, a volumetric flow rate (V3P) of the gas discharged through the permeable part of the third gas separation membrane unit may be a volumetric flow rate of a gas in which a portion of the gas discharged through the permeable part of the first gas separation membrane unit is mixed with the gas discharged through the permeable part of the third gas separation membrane unit.

In the present disclosure, the gas separation membrane may operate smoothly by compressing each gas flow and supplying the gas flow to each gas separation membrane unit.

In the present disclosure, in the first step, the mixed gas may be compressed by a first compressor. As the first compressor, any commercially available gas compressor may be used without restriction.

In the present disclosure, in the third step, the gas supplied to the second gas separation membrane unit may be compressed by a second compressor, before being supplied to the supply part of the second gas separation membrane unit.

In the present disclosure, in the fourth step, the gas supplied to the third gas separation membrane unit may be compressed by a third compressor, before being supplied to the supply part of the third gas separation membrane unit.

In the present disclosure, commercially available blowers may be used as the second and third compressors, respectively.

In the present disclosure, it is particularly suitable for using combustion gas as the mixed gas and separating carbon dioxide therefrom. In addition, in the present disclosure, it is possible to obtain the highest concentration of carbon dioxide (target product) when using the combustion gas, especially gas having a carbon dioxide content of a certain ratio or higher.

In the present disclosure, for example, a gas having a volumetric ratio of carbon dioxide and oxygen within a specific range may be used as the mixed gas. Specifically, the mixed gas may have a volumetric ratio (CO₂/O₂) of carbon dioxide (CO₂) and oxygen (O₂) of 1.5 or more. The present disclosure does not specifically limit the upper limit of the ratio. An expected effect of the present disclosure is greater as a mixed gas with a high carbon dioxide content is used.

As described above, in the present disclosure, when the gas to be separated is supplied to the gas separation membrane unit, the gas to be separated is compressed and then supplied. The compressed gas usually has high temperature and moisture content, so that the compressed gas is required to be cooled and dried. Particularly, it is preferable to perform this process before supplying the compressed mixed gas to the first separation membrane.

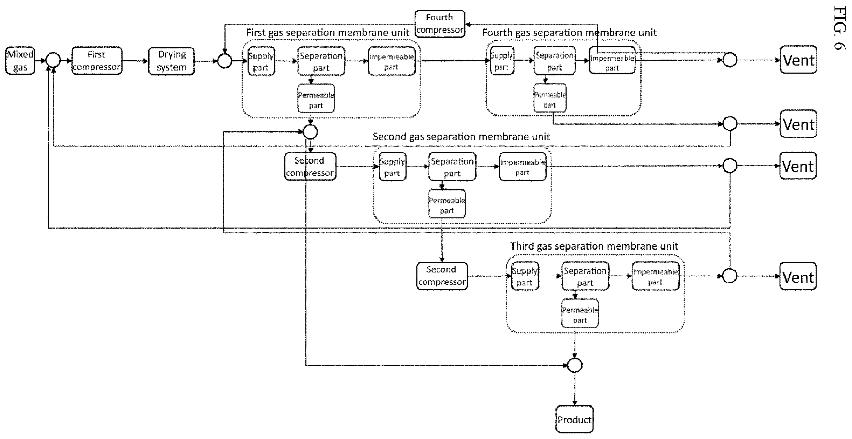

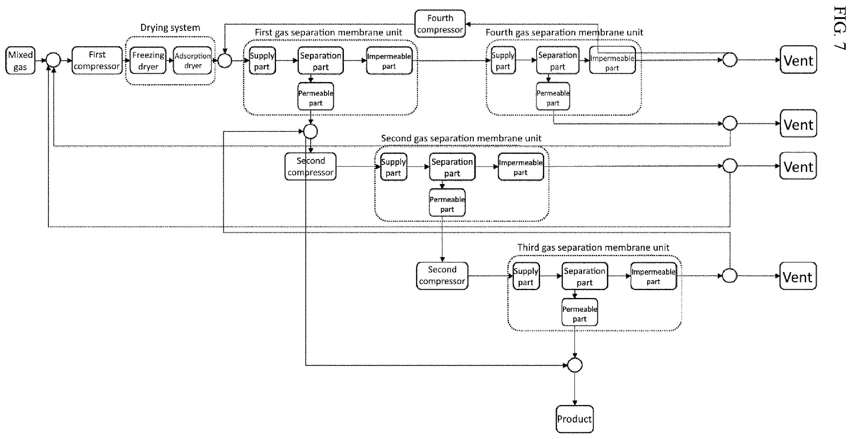

Therefore, the present disclosure may further include a sixth step of drying the compressed mixed gas, after the first step and before the second step. This is illustrated in FIGS. 6 and 7. The method of the drying process is not particularly limited.

FIG. 6 schematically illustrates the sixth step. FIG. 7 illustrates detailed equipment specifications for performing the sixth step, and a process of supplying the compressed gas that has passed through the first compressor to the first gas separation membrane unit by sufficiently cooling and drying the compressed gas by a freezing dryer and an adsorption dryer sequentially disposed. After drying by the freezing dryer, the compressed gas is dried by the adsorption dryer to manage fine moisture more efficiently. However, this content is exemplary, and in the present disclosure, dryers using methods other than the freezing method or the adsorption method may also be applied. In addition to the content, in the present disclosure, other processes and facilities for separating the target component (e.g., carbon dioxide) from the mixed gas, specifically, combustion gas may be further used.

For example, the gas may be compressed by the second compressor, the third compressor, etc., and the compressed gas may be cooled using an after cooler, etc., before being supplied to the second and third gas separation membrane units, etc.

Hereinafter, the present disclosure will be described in more detail by Examples. However, the scope of the present invention is not limited to the following Examples.

A process of separating combustion gas containing carbon dioxide and oxygen was performed using process equipment disposed as illustrated in FIG. 7. Table 1 below showed main factors and measurement results of the corresponding process. The carbon dioxide and oxygen contents of the raw material mixed gas were measured using a precision analyzer. The remaining components in the raw material mixture gas, excluding carbon dioxide and oxygen, refer to inert components such as nitrogen, so that detailed compositions thereof were not shown. In addition, values such as flow rate, etc. disclosed in Table 1 below were values reflecting correction values using a flow meter.

**[Table 1]**

| | | Example | | | Comparative Example | | |
|---|---|---|---|---|---|---|---|
| | | 1 | 2 | 3 | 1 | 2 | 3 |
| Raw mixed gas | CO₂ content (Vol%) | 6.9 | 6.4 | 6.5 | 7.1 | 6.9 | 6.6 |
| | O₂ content (Vol%) | 3.9 | 3.4 | 3.3 | 3.5 | 3.6 | 3.4 |
| First gas separation membrane unit | Inflow pressure of supply part (bara) | 2.13 | 2.30 | 2.30 | 4.96 | 5.03 | 5.04 |
| | Inflow rate of supply part (Nm³/hr) | 180.861 | 191.356 | 193.063 | 335.634 | 337.024 | 335.493 |
| | Outflow rate of permeable part (Nm³/hr) | 22.996 | 23.529 | 24.488 | 85.943 | 93.915 | 92.259 |
| | Stage Cut | 0.127 | 0.123 | 0.127 | 0.256 | 0.279 | 0.275 |
| Second gas separation membrane unit | Inflow rate of supply part (Nm³/hr) | 22.996 | 23.529 | 24.488 | 85.943 | 93.915 | 92.259 |
| | Outflow rate of permeable part (Nm³/hr) | 15.089 | 15.039 | 14.984 | 21.306 | 18.671 | 18.782 |
| | Stage Cut | 0.656 | 0.637 | 0.612 | 0.248 | 0.199 | 0.203 |
| Third gas separation membrane unit | Inflow rate of supply part (Nm³/hr) | 15.089 | 15.039 | 14.984 | 21.306 | 18.671 | 18.782 |
| | Outflow rate of product (Nm³/hr) | 10.003 | 10.329 | 10.365 | 17.456 | 17.999 | 17.992 |
| | Stage Cut | 0.663 | 0.687 | 0.691 | 0.819 | 0.964 | 0.957 |
| Efficiency | CO₂ Concentration of product (Vol%) | 89.7 | 90.6 | 90.5 | 93.0 | 91.2 | 91.2 |
| | Power consumption (kWh) | 58 | 62 | 61 | 107 | 109 | 107 |
| | 90 vol% CO₂ production per kWh (Nm³/hr) | 0.172 | 0.172 | 0.173 | 0.163 | 0.166 | 0.168 |

In Examples 1 to 3, main design elements corresponded to setting a pressure of the mixed gas supplied to the first gas separation membrane unit to less than 5 bara, and setting a ratio of the flow rate of the mixed gas supplied to the first gas separation membrane unit to the flow rate of the gas discharged through the permeable part of the first gas separation membrane unit within the range specified in the present disclosure.

In Comparative Examples 1 to 3, main design elements corresponded to setting the pressure of the mixed gas supplied to the first gas separation membrane unit to more than 5 bara, and setting the ratio of the flow rate of the mixed gas supplied to the first gas separation membrane unit to the flow rate of the gas discharged through the permeable part of the first gas separation membrane unit to exceed the range specified in the present disclosure.

Through Table 1, it may be confirmed that compared to Comparative Examples, in Examples, a much larger amount of high-concentration (90 volume% or more) carbon dioxide may be produced based on the same input power.

## Claims

1. A method for separating a mixed gas, the method comprising:
a first step of preparing a compressed mixed gas;
a second step of supplying the compressed mixed gas to a first gas separation membrane unit by a supply part of the first gas separation membrane unit, discharging gas that permeates through the separation part of the first gas separation membrane unit through a permeable part of the first gas separation membrane unit, and discharging gas that does not permeate through the separation part of the first gas separation membrane unit through an impermeable part of the first gas separation membrane unit;
a third step of supplying the gas that permeates through the permeable part of the first gas separation membrane unit to a second gas separation membrane unit by a supply part of the second gas separation membrane unit, discharging gas that permeates through the separation part of the second gas separation membrane unit through a permeable part of the second gas separation membrane unit, and discharging gas that does not permeate through the separation part of the second gas separation membrane unit through an impermeable part of the second gas separation membrane unit; and
a fourth step of supplying the gas that is discharged through the permeable part of the second gas separation membrane unit to the third gas separation membrane unit by a supply part of the third gas separation membrane unit, discharging gas that permeates through a separation part of the third gas separation membrane unit through a permeable part of the third gas separation membrane unit, and discharging gas that does not permeates through the separation part of the third gas separation membrane unit through an impermeable part of the third separation membrane unit,
wherein in the second step, a ratio (V1P/V1F) of a volumetric flow rate (V1F) of the gas supplied to the first gas separation membrane unit by the supply part of the first gas separation membrane unit and a volumetric flow rate (V1P) of the gas discharged through the permeable part of the first gas separation membrane unit is controlled to less than 0.2.

2. The method of claim 1, wherein in the third step, a ratio (V2P/V2F) of a volumetric flow rate (V2F) of the gas supplied to the second gas separation membrane unit by the supply part of the second gas separation membrane unit and a volumetric flow rate (V2P) of the gas discharged through the permeable part of the second gas separation membrane unit is controlled in the range of 0.5 to 0.8.

3. The method of claim 1, wherein in the first step, a compressed mixed gas having a pressure in the range of 2.0 bara to 4 bara is prepared.

4. The method of claim 1, further comprising:
a fifth step of supplying the gas discharged through the impermeable part of the first separation membrane unit to a fourth separation membrane unit by a supply part of the fourth separation membrane unit,
discharging the gas permeating through the separation part of the fourth separation membrane unit through a permeable part of the fourth separation membrane unit, and
discharging the gas that does not permeate through the separation part of the fourth separation membrane unit through an impermeable part of the fourth separation membrane unit.

5. The method of claim 4, wherein in the fifth step, the gas discharged through the permeable part of the fourth gas separation membrane unit is branched, and a portion of the branched gas is emitted and the remaining portion is prepared as the compressed mixed gas in the first step.

6. The method of claim 4, wherein in the fifth step, the gas discharged through the impermeable part of the fourth gas separation membrane unit is branched, and a portion of the branched gas is emitted and
the remaining portion is supplied to the first gas separation membrane unit by the supply part of the first gas separation membrane unit together with the compressed mixed gas in the second step.

7. The method of claim 6, wherein in the fifth step, before mixing a portion of the gas discharged through the impermeable part of the fourth gas separation membrane unit with the compressed mixed gas in the second step,
in the gas discharged through the impermeable part of the fourth gas separation membrane unit, a portion of the gas supplied to the first gas separation membrane unit by the supply part of the first gas separation membrane unit is further compressed.

8. The method of claim 1, wherein in the third step, the gas discharged through the impermeable part of the second gas separation membrane unit is branched, and a portion of the branched gas is emitted and the remaining portion is prepared as the compressed mixed gas in the first step.

9. The method of claim 1, wherein in the fourth step, the gas discharged through the impermeable part of the third gas separation membrane unit is branched, and a portion of the branched gas is emitted and the remaining portion is supplied to the second gas separation membrane unit by the supply part of the second gas separation membrane unit together with the gas discharged through the permeable part of the first gas separation membrane unit.

10. The method of claim 1, wherein in the second step, the gas discharged through the permeable part of the first gas separation membrane unit is branched, and a portion of the branched gas is supplied to the second gas separation membrane unit and the remaining portion is mixed with the gas discharged through the permeable part of the third gas separation membrane unit.

11. The method of claim 10, wherein in the fourth step, a ratio (V3P/V3F) of a volumetric flow rate (V3F) of the gas supplied to the third gas separation membrane unit by the supply part of the third gas separation membrane unit and a volumetric flow rate (V3P) of the gas discharged through the permeable part of the third gas separation membrane unit is controlled in the range of 0.5 to 0.8.

12. The method of claim 1, wherein in the first step, the mixed gas is compressed by a first compressor.

13. The method of claim 12, wherein in the third step, the gas supplied to the second gas separation membrane unit is compressed by a second compressor, before being supplied to the supply part of the second gas separation membrane unit.

14. The method of claim 12, wherein in the fourth step, the gas supplied to the third gas separation membrane unit is compressed by a third compressor, before being supplied to the supply part of the third gas separation membrane unit.

15. The method of claim 1, wherein a volumetric ratio (CO₂/O₂) of carbon dioxide (CO₂) and oxygen (O₂) of the mixed gas is 1.5 or more.

16. The method of claim 1, further comprising:
after the first step and before the second step,
a sixth step of drying the compressed mixed gas.
